# EUROPÄISCHE PATENTSCHRIFT

(11) **EP 3 887 798 B1**
(45) Veröffentlichungstag und Bekanntmachung des Hinweises auf die Patenterteilung: **07.06.2023**
(21) Anmeldenummer: 19805561.8
(22) Anmeldetag: 11.11.2019
(51) Int. Cl.: G01N 21/25, G01N 21/31, G01N 21/47

(54) **SPEKTROMETERVORRICHTUNG UND EIN ENTSPRECHENDES VERFAHREN ZUM BETREIBEN EINER SPEKTROMETERVORRICHTUNG**
SPECTROMETER APPARATUS AND A CORRESPONDING METHOD FOR OPERATING A SPECTROMETER APPARATUS
DISPOSITIF SPECTROMÈTRE ET PROCÉDÉ CORRESPONDANT POUR FAIRE FONCTIONNER UN DISPOSITIF SPECTROMÈTRE

(30) Priorität: 29.11.2018 DE 102018220601
(43) Veröffentlichungstag der Anmeldung: 06.10.2021
(73) Patentinhaber: Robert Bosch GmbH, 70442 Stuttgart (DE)
(72) Erfinder: BUCK, Thomas, 71732 Tamm (DE); HUSNIK, Martin, 70176 Stuttgart (DE); HUBER, Christian, 71638 Ludwigsburg (DE); SCHMID, Marc, 70565 Stuttgart (DE); STEIN, Benedikt, 70193 Stuttgart (DE); KRAEMMER, Christoph Daniel, 76137 Karlsruhe (DE)
(86) Internationale Anmeldenummer: PCT/EP2019/080799
(87) Internationale Veröffentlichungsnummer: WO 2020/108967

(56) Entgegenhaltungen:
- EP-A1- 1 314 972
- US-A1- 2009 073 421

## Beschreibung

Die vorliegende Erfindung betrifft eine Spektrometervorrichtung und ein entsprechendes Verfahren zum Betreiben einer Spektrometervorrichtung.

### Stand der Technik

Spektrometer dienen in vielen Bereichen der Wissenschaft als unerlässlich zur Analyse von Proben jeglicher Art. In den letzten Jahren besteht der Trend, Spektrometer zu miniaturisieren, weil sie dadurch flexibler eingesetzt werden können. Spektrometer bestehen in der Regel aus einer Lichtquelle, einem spektralen Filter und einem Detektor. Der Filter ist dabei zwischen Lichtquelle und Probe oder zwischen Probe und Detektor platziert. So beschreibt die US Patentveröffentlichung US 7,061,619 B2 ein miniaturisiertes Spektrometer. Mit der Verbreitung von Handys und Smartphones entstand folglich die Idee, ein Spektrometer in ein handgehaltenes Gerät zu integrieren. Damit ließe sich das Spektrometer auch unterwegs nutzen und erfasste Spektren z.B. in einer Cloud für jeden Benutzer frei zugänglich zu speichern. In dieser Weise könnten Spektren zur Vergleichsanalyse verwendet werden, um zum Beispiel die Reife einer Frucht zu ermitteln. In einem weiteren Schritt könnten intelligente Algorithmen die gespeicherten Spektren nutzen, um z.B. im Bereich der Robotik maschinelles Sehen zu realisieren. Diese Anwendungen setzen jedoch Spektren voraus, die fehlerfrei erfasst worden sind, was herkömmlicherweise nur von einer geschulten Person möglich war. Jedoch beanspruchen die neuen Anwendung ein Erfassen auch von ungeschulten Personen voraus.

Um die Zuverlässigkeit erfasster Spektren zu erhöhen und Fehlerquellen zu vermeiden, kann ein Kontakt zwischen Spektrometer und Probe von Vorteil sein. Z.B. beschreibt die US Patentveröffentlichung US 6,045,502 A ein Spektrometer, welches mit der Probe über ein Indexanpassungsmittel in Kontakt steht. Dieses oft gelförmige Mittel wird verwendet, um ungewünschte Reflexionen zu vermieden werden, welche das Spektrum verfälschen könnten.

Die Patentveröffentlichung US 2009/073421 A1 offenbart eine Spektrometervorrichtung mit einer Kontaktsensoreinrichtung zum Ermitteln eines Kontakts zwischen der Probe und der Spektrometervorrichtung und zum Ausgeben eines entsprechenden Ausgangssignals. Eine Steuereinrichtung zum Steuern der Lichtquelle und der Erfassungseinrichtung ist derart gestaltet, dass sie einen Betriebsparameter der Lichtquelle und der Erfassungseinrichtung ändert, wenn das Ausgangssignal den Kontakt zwischen der Probe und der Spektrometervorrichtung anzeigt.

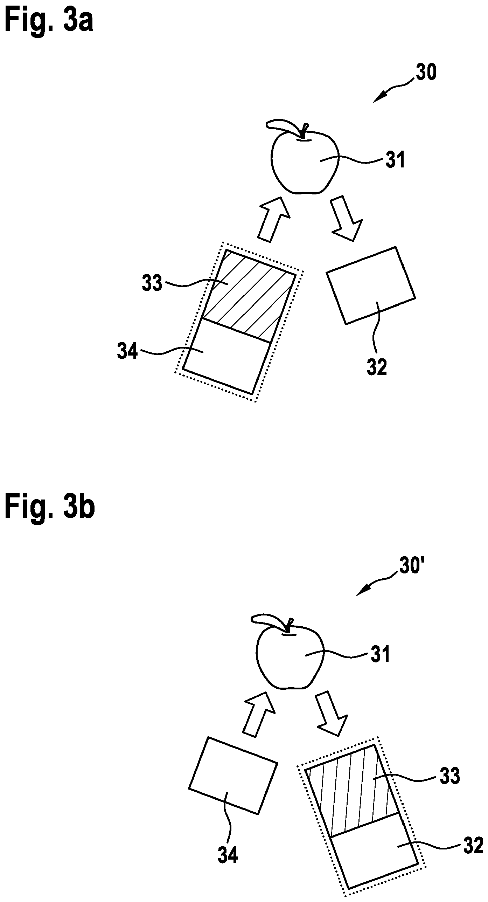

Fig. 3a)-3b) sind schematische Darstellungen einer typischen Spektrometervorrichtung mit Probe.

So umfasst die Spektrometervorrichtung 30 der Fig. 3a) eine Probe 31, die vor eine Erfassungseinrichtung 32, eine optische Filtereinrichtung 33 und eine Lichtquelle 34 positioniert ist. In diesem Beispiel ist die optische Filtereinrichtung 33 direkt vor der Lichtquelle 34 positioniert, so dass immer nur gefilterte, in der Regel schmalbandige optische Strahlung auf die Probe 31 auftrifft. Ein Teil der von der Probe reflektierten und ggf. angeregten Strahlung trifft dann auf die Erfassungseinrichtung 32, die dann ein Spektrum der Probe erfassen kann.

Als Aufbaus-Variante zeigt Fig. 3b) eine Spektrometervorrichtung 30', in der die optische Filtereinrichtung 33 nicht vor der Lichtquelle 34, sondern vor der Erfassungseinrichtung 32 platziert ist. So trifft das volle Spektrum der in der Regel breitbandigen Lichtquelle gleichzeitig auf die Probe 31, und die von der Probe 31 reflektierte und ggf. angeregte Strahlung wird gefiltert bevor sie auf die Erfassungseinrichtung 32 trifft.

### Offenbarung der Erfindung

Die Erfindung schafft eine Spektrometervorrichtung nach Anspruch 1 und ein entsprechendes Verfahren zum Betreiben einer Spektrometervorrichtung nach Anspruch 10.

Bevorzugte Weiterbildungen ist Gegenstand der jeweiligen Unteransprüche.

### Vorteile der Erfindung

Zur vereinfachten Handhabung ist es wünschenswert, auf ein Indexanpassungsmittel zur Kontaktnahme zu verzichten. Außerdem sollten die miniaturisierten Spektrometer so ausgestaltet werden, dass je nach Kontaktbestand Erfassungsparameter wie die Messdauer oder die Beleuchtungsstärke angepasst werden können. Alternativ sollten die Spektren zumindest mit einer Kennzeichnung versehen werden, aus welcher hervorgeht, ob das Spektrum bei bestehendem Kontakt zwischen Probe und Spektrometer erfasst worden ist.

Die der vorliegenden Erfindung gemäß den unabhängigen Ansprüchen 1 und 10 zugrundeliegende Idee liegt darin, eine Spektrometervorrichtung mit einer Kontakterkennung bereitzustellen. Je nach bestehendem Kontakt zwischen Probe und Spektrometer können Betriebsparameter angepasst werden, die dem bestehenden Kontakt Rechnung tragen. So ist bei bestehendem Kontakt das Streulicht in der Regel abgeschirmt, was zu einem höheren Signal-zu-Rausch Verhältnis führt. So reicht unter Umständen eine reduzierte Messdauer oder eine reduzierte Beleuchtungsstärke aus, um verlässliche Spektren zu erfassen. Umgekehrt sollten diese Parameter bei fehlendem Kontakt unter Umständen erhöht werden.

Gemäß der Erfindung ist die Steuereinrichtung derart gestaltet, dass das Erfassen des Spektrums nur bei vorhandenem Kontakt zwischen der Spektrometervorrichtung und der Probe aktiviert ist.

Dies bringt den Vorteil einer höheren Verlässlichkeit der erfassten Spektren. So kann ein erfasstes Spektrum mit vorhandenem Kontakt einfacher fehlerfrei erfasst werden, weil im Falle von undurchsichtigen Proben Streulicht und auch andere Umwelteinflüsse abgeschirmt werden, welche die Messdaten verfälschen könnten. So wird es auch für ungeschulte Benutzer möglich, ein Spektrum mit hoher Zuverlässigkeit zu erfassen.

Erfindungsgemäß ist die Steuereinrichtung derart gestaltet, dass bei fehlendem Kontakt zwischen der Spektrometervorrichtung und der Probe ein Hinweissignal an den Benutzer ausgebbar ist. Dieses Hinweissignal kann dazu genutzt werden, den Benutzer bei fehlendem Kontakt aufzufordern, die Beleuchtungsstärke zu vermindern, weil sie über dem zulässigen Grenzwert liegt. Auch gibt es dem Benutzer Gelegenheit, die Positionierung der Probe zu Spektrometervorrichtung zu korrigieren, um einen Kontakt herzustellen. So ist sichergestellt, dass der Benutzer nicht irrtümlich ein Spektrum bei fehlendem Kontakt erfasst, was er eigentlich bei bestehendem Kontakt aufnehmen wollte.

Gemäß einer bevorzugten Weiterbildung ist die Steuereinrichtung derart gestaltet, dass das Erfassen des Spektrums bei vorhandenem Kontakt zwischen der Spektrometervorrichtung und der Probe mit höherer oder niedrigerer Beleuchtungsstärke als bei fehlendem Kontakt aktiviert ist. Mit dem bestehenden Kontakt ist in der Regel eine Abschirmung verbunden, die bei einer undurchsichtigen Probe kein Streulicht mehr in die Spektrometervorrichtung eindringen, und auch emittiertes Licht der Lichtquelle nicht mehr nach außen dringen lässt. Daher erlaubt es der bestehende Kontakt, ein durch Sicherheitsvorschriften festgelegter Grenzwert der Beleuchtungsstärke zu überschreiten, was sonst für das menschliche Auge gefährlich wäre. Mit der erhöhten Beleuchtungsstärke lässt sich das Signal-zu-Rauschen Verhältnis und damit die Genauigkeit des erfassten Spektrums verbessern. Eine niedrigere Beleuchtungsstärke bringt den Vorteil von einer Energieersparnis im Betrieb des Spektrometers.

Gemäß einer weiteren bevorzugten Weiterbildung ist die Steuereinrichtung derart gestaltet, dass bei bestehendem Kontakt zwischen der Spektrometervorrichtung und der Probe dem Spektrum ein Label zuordenbar ist, welches den Kontakt bezeichnet.

Dieses Label gibt Auskunft über die Zuverlässigkeit des erfassten Spektrums, weil davon ausgegangen wird, dass ein bei bestehendem Kontakt erfasstes Spektrum größere Zuverlässigkeit besitzt, als ein bei fehlendem Kontakt erfasstes Spektrum. Daher ermöglicht diese Weiterbildung ein Unterscheiden der Spektren nach Zuverlässigkeit in z.B. einer Datenbank, was für eine Vergleichsanalyse mit einem anderen Spektrum einer ähnlichen Probe wichtig ist.

Gemäß einer weiteren bevorzugten Weiterbildung umfasst der Betriebsparameter die Messdauer und/oder die Scanzeit. Mit dieser Weiterbildung kann die Messdauer und/oder die Scanzeit entsprechend des Ausgangssignals angepasst werden, um ein ausreichend großes Signal-zu-Rauschen Verhältnis zu gewährleisten. So benötigt man bei vorhandenem Kontakt zwischen Probe und Spektrometervorrichtung in der Regel weniger Messdauer und/oder Scanzeit, womit insgesamt Zeit zum Erfassen eines Spektrums eingespart wird.

Gemäß einer weiteren bevorzugten Weiterbildung ist die Spektrometervorrichtung in ein Handy, ein Smartphone oder ein sonstiges handgehaltenes Gerät integriert. Diese Integration erleichtert den Einsatz der Spektrometervorrichtung erheblich. So wird ein Einsatz auch unterwegs z.B. an schwer zugänglichen Orten ermöglicht. Damit müssen Proben nicht mehr nur zur Spektrometervorrichtung sondern die Spektrometervorrichtung kann auch zur Probe gebracht werden. Das erlaubt z.B. das Erfassen von Spektren von Pflanzen an ihrem ursprünglichen Ort in der freien Natur. Das ermöglicht z.B. den Reifegrad einer Frucht zu ermitteln, bevor die Frucht geerntet worden ist.

Gemäß einer weiteren bevorzugten Weiterbildung enthält die Kontaktsensoreinrichtung Näherungsschalter, Umgebungslichtsensor, Trägheitssensor, und/oder eine Kamera. Der Einsatz einer oder mehrerer der aufgeführten Geräte erhöht die Verlässlichkeit der Kontakterkennung und reduziert die Wahrscheinlichkeit einer Missdeutung. Der Näherungsschalter kann dabei ein induktiver Näherungsschalter, ein kapazitiver Näherungsschalter, ein magnetischer Näherungsschalter (z.B. ein Reedschalter oder ein Reedkontakt, oder auch Hallsensor), ein optischer Näherungsschalter, eine Lichtschranke oder ein Ultraschall-Näherungsschalter oder ein Mikrotaster sein, welcher bei Oberflächenkontakt einen elektrischen Kontakt schließt. Der Umgebungslichtsensor kann bei abgeschalteter oder modulierter Lichtquelle auf eine Dunkelheit schließen, wodurch ein Kontakt erkannt wird. Bei dem Trägheitssensor kann durch eine Signalanalyse z.B. eines Beschleunigungsspektrums auf den Zustand geschlossen werden, ob der Kontakt zwischen Spektrometervorrichtung und Probe besteht. Mit der Kamera kann durch direkte Beobachtung auf einen Kontakt geschlossen werden.

Gemäß einer weiteren bevorzugten Weiterbildung weist die Lichtquelle eine Glühlampe, einen thermischen Emitter, eine LED, eine LED mit Phosphor-Lichtquelle, einen Weißlichtlaser, eine Quantenpunkt-Lichtquelle, eine Weißlichtquelle, eine Gasentladungslampe oder eine sonstige breitbandige Lichtquelle auf. Diese Weiterbildung ermöglicht ein Spektrum über einen breiten Wellenlängen- bzw. Frequenzbereich zu erfassen. Durch einen größeren Bereich können in der Regel mehr Informationen aus der Probe entnommen werden.

Gemäß einer weiteren bevorzugten Weiterbildung weist die Filtereinrichtung ein Fabry-Pérot Interferometer oder eine optische Gittereinrichtung auf.

Mit dieser Einrichtung kann die optische Strahlung effektiv und durchstimmbar spektral gefiltert werden, womit sich ein Spektrum mit hoher spektraler Auflösung erfassen lässt. Dadurch können in der Regel mehr Informationen aus der Probe entnommen werden.

Gemäß einer weiteren bevorzugten Weiterbildung ist die Kontaktsensoreinrichtung separat von der Spektrometervorrichtung vorgesehen.

In dieser Weiterbildung ist die Kontaktsensoreinrichtung nicht mit der Spektrometervorrichtung verbunden, sondern kann in einem separaten Teil eines übergeordneten Geräts, wie ein Smartphone, installiert sein. Das ermöglicht, in dem Gerät bereits vorhandene Komponenten für die Kontaktsensoreinrichtung zu verwenden.

Gemäß einer weiteren bevorzugten Weiterbildung wird das Erfassen des Spektrums nur bei vorhandenem Kontakt zwischen der Spektrometervorrichtung und der Probe aktiviert. Diese Weiterbildung bringt ebenfalls den Vorteil einer höheren Verlässlichkeit der erfassten Spektren. So kann ein erfasstes Spektrum mit vorhandenem Kontakt einfacher fehlerfrei erfasst werden, weil Streulicht und andere Umwelteinflüsse abgeschirmt werden, welche die Messdaten verfälschen könnten. So wird es auch für ungeschulte Benutzer möglich, ein Spektrum mit hoher Zuverlässigkeit zu erfassen.

Gemäß einer weiteren bevorzugten Weiterbildung wird das Erfassen des Spektrums bei vorhandenem Kontakt zwischen der Spektrometervorrichtung und der Probe mit höherer Beleuchtungsstärke als bei fehlendem Kontakt aktiviert. Hier erlauben ebenfalls der bestehende Kontakt mit einer undurchsichtigen Probe und die damit verbundene Abschirmung, ein durch Sicherheitsvorschriften festgelegter Grenzwert der Beleuchtungsstärke zu überschreiten, welcher sonst für das menschliche Auge gefährlich wäre. Mit der erhöhten Beleuchtungsstärke lässt sich das Signal-zu-Rauschen Verhältnis und damit die Genauigkeit des erfassten Spektrums verbessern.

Gemäß einer weiteren bevorzugten Weiterbildung wird bei fehlendem Kontakt zwischen der Spektrometervorrichtung und der Probe ein Hinweissignal an den Benutzer ausgegeben. Dieses Hinweissignal kann dazu genutzt werden, bei fehlendem Kontakt den Benutzer aufzufordern, die Beleuchtungsstärke zu vermindern, weil sie über dem zulässigen Grenzwert liegt. Auch gibt es dem Benutzer Gelegenheit, die Positionierung der Probe zu Spektrometervorrichtung zu korrigieren, um einen Kontakt wiederherzustellen. So ist sichergestellt, dass der Benutzer nicht irrtümlich ein Spektrum bei fehlendem Kontakt erfasst, was er eigentlich bei bestehendem Kontakt aufnehmen wollte.

Weitere Merkmale und Vorteile der vorliegenden Erfindung werden nachfolgend anhand von Ausführungsformen mit Bezug auf die Figuren erläutert.

Es zeigen:
- Fig. 1): schematische Darstellung der Spektrometervorrichtung mit Probe gemäß einer ersten Ausführungsform der Erfindung;
- Fig. 2): schematische Darstellung des Verfahrens zum Betreiben einer Spektrometervorrichtung gemäß der ersten Ausführungsform der Erfindung; und
- Fig. 3a)-3b): schematische Darstellungen einer typischen Spektrometervorrichtung mit Probe.

### Ausführungsformen der Erfindung

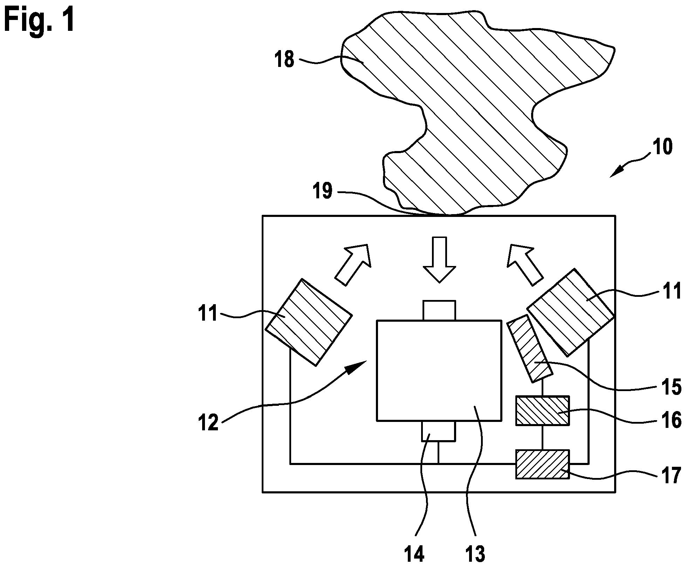

In den Figuren bezeichnen gleiche Bezugszeichen gleiche bzw. funktionsgleiche Elemente. Fig. 1) ist eine schematische Darstellung der Spektrometervorrichtung mit Probe gemäß einer ersten Ausführungsform der vorliegenden Erfindung.

In der Darstellung von Fig. 1) enthält die Spektrometervorrichtung 10 zwei Lichtquellen 11, eine Erfassungseinrichtung 12, die eine optischen Filtereinrichtung 13 und einen Photodetektor 14 umfasst, eine Kontaktsensoreinrichtung 15, 16, die einen Umgebungslichtsensor 15 und einen Trägheitssensor 16 umfasst, und eine Steuereinrichtung 17, die mit der Kontaktsensoreinrichtung 15, 16, der Erfassungseinrichtung 12 und den Lichtquellen 11 verbunden ist. Eine Probe 18 ist dabei mit der Spektrometervorrichtung 10 in Kontakt 19, was bedeutet, dass die Probe 18 die Spektrometervorrichtung 10 physisch berührt, oder sehr nahe zu ihr positioniert ist.

Die hier dargestellten zwei Lichtquellen 11 sind angewinkelt, so dass ein Beleuchtungsfeld mit z.B. einem Fenster (nicht dargestellt) der Spektrometervorrichtung 10 überlappt, wodurch die Probe beleuchtet wird. Die von der Probe reflektierte und ggf. angeregte Strahlung trifft zum Teil vorzugsweise durch eine Optik in die Filtereinrichtung 13 der Erfassungseinrichtung ein. Die Filtereinrichtung ist dabei so beschaffen, dass sie die Strahlung in einem festgelegten Wellenlängenbereich durchstimmbar filtern kann, so dass immer nur ein schmalbandiger Bereich auf den Photodetektor 14 auftrifft. Mit dem Durchstimmen wird schließlich das Spektrum in dem festgelegten Wellenlängenbereich erfasst.

Ein Blickfeld des Umgebungslichtsensors 15 überlappt mit dem Beleuchtungsfeld der Lichtquellen 11 und dem Fenster der Spektrometervorrichtung 10. So trifft bei Kontakt 19 mit einer undurchsichtigen Probe 18 und ausgeschalteter Lichtquellen 11 praktisch kein Umgebungslicht mehr in die Spektrometervorrichtung 10 ein, weshalb der Umgebungslichtsensor 15 bei der undurchsichtiger Probe 18 eine Dunkelheit erkennt. Der Trägheitssensor 16 unterstützt die Messung indem er ein Beschleunigungsspektrum zur Verfügung stellt, welches weiteren Aufschluss über einen Kontakt 19 geben kann. So kann bei bestehendem Kontakt 19 das Beschleunigungsspektrum weniger hochfrequente Ausschläge aufweisen, weil sich dann die Trägheit durch die Gesamtmasse von Spektrometervorrichtung 10 und Probe 18 erhöht hat. Diese Daten können insbesondere bei lichtdurchlässigen Proben von Vorteil sein, einen Kontakt 19 zweifelsfrei zu bestimmen.

Die Steuereinrichtung 17 erhält die Daten von der Kontaktsensoreinrichtung 15, 16 und steuert entsprechend die Lichtquellen 11 und die Erfassungseinrichtung 12 an und legt deren Betriebsparameter fest. In der Regel erhöht die Steuereinrichtung 17 die Beleuchtungsstärke der Lichtquellen 11 bei bestehendem Kontakt 19. Umgekehrt sollte bei fehlendem Kontakt die Beleuchtungsstärke unter den durch Sicherheitsvorschriften festgelegten Grenzwert reduziert. Die Steuereinrichtung 17 steuert die Erfassungseinrichtung 12 in der Regel so an, dass bei bestehendem Kontakt die Messdauer und/oder Scanzeit kleiner ist als bei fehlendem Kontakt. Dies hängt jedoch von der spezifischen Probe ab, z.B. ob sie zumindest partiell lichtdurchlässig ist. Auch ist vorgesehen, dass die Betriebsparameter automatisch festgelegt werden, oder vom Benutzer manipuliert werden können.

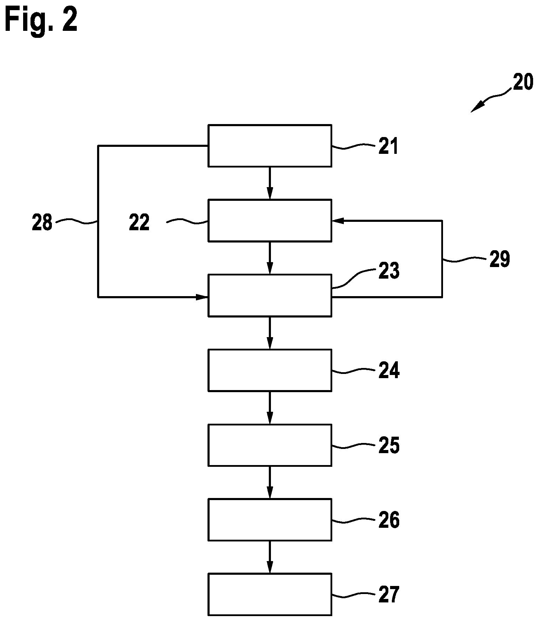

Fig. 2) ist eine schematische Darstellung des Verfahrens zum Betreiben einer Spektrometervorrichtung gemäß der ersten Ausführungsform der vorliegenden Erfindung.

Das Verfahren 20 zum Betrieb der Spektrometervorrichtung 10 beginnt mit einer Klassifizierung 21 der Probe. Die Probe wird nun relativ zur Spektrometervorrichtung 10 positioniert 22. Anschließend wird von der Kontaktsensoreinrichtung 15, 16 ermittelt 23, ob ein Kontakt 19 zwischen Spektrometervorrichtung 10 und Probe 18 besteht. Bei bestehendem Kontakt 19 wird die Beleuchtungsstärke der zumindest einen Lichtquelle erhöht oder maximiert 24. Außerdem werden die übrigen Messparameter wie die Messdauer und/oder die Scanzeit angepasst 25, bevor das Spektrum der Probe 18 von der Erfassungseinrichtung 12 erfasst 26 wird. Abschließend wird eine Kennzeichnung 27 des erfassten Spektrums vorgenommen, die die Art der Probe und/oder die Information beinhalten kann, ob die Probe bei bestehendem Kontakt erfasst wurde.

Bei der Klassifizierung 21 der Probe 18 kann ein Kontaktschwellenwert, der für das Ermitteln 23 eines Kontakts 19 genutzt wird, angepasst 28 werden. So erkennt zum Beispiel ein Trägheitssensor einen Kontakt 19 bei weichen Probenmaterialien wie z.B. Textilien schwieriger als bei harten und schweren Proben 18. Außerdem kann beim Schritt des Ermittelns 23 des Kontakts 19 und Feststellung eines fehlenden Kontakts 19 der Benutzer aufgefordert 29 werden, die Spektrometervorrichtung relativ zur Probe neu zu positionieren.

Obwohl die vorliegende Erfindung anhand bevorzugter Ausführungsbeispiele beschrieben wurde, ist sie darauf nicht beschränkt. Insbesondere sind die genannten Materialien und Topologien nur beispielhaft und nicht auf die erläuterten Beispiele beschränkt.

Insbesondere können andere Neigungsrichtungen Winkel, Geometrien etc. für die einzelnen Elemente gewählt werden. Auch Elemente und Komponenten können in anderer sinnvoller Weise angeordnet werden.

## Patentansprüche

1. Spektrometervorrichtung (10) mit:
zumindest einer Lichtquelle (11) zum Bestrahlen einer Probe (18) mit Licht;
einer optischen Erfassungseinrichtung (12) zum Erfassen (26) des von der Probe (18) gestreuten Lichts;
mindestens einer optischen Filtereinrichtung (13), welche vor und/oder hinter der Probe (18) angeordnet ist,
einer Kontaktsensoreinrichtung (15, 16) zum Ermitteln eines Kontakts (19) zwischen der Probe (18) und der Spektrometervorrichtung (10) und zum Ausgeben eines entsprechenden Ausgangssignals;
einer Steuereinrichtung (17) zum Steuern der Lichtquelle (11) und der Erfassungseinrichtung (12) ansprechend auf das Ausgangssignal;
wobei die Steuereinrichtung (17) derart gestaltet ist, dass sie zumindest einen Betriebsparameter der Lichtquelle (11) und der Erfassungseinrichtung (12) ändert, wenn das Ausgangssignal den Kontakt (19) zwischen der Probe (18) und
der Spektrometervorrichtung (10) anzeigt,
**dadurch gekennzeichnet, dass** die Steuereinrichtung (17) derart gestaltet ist, dass das Erfassen des Spektrums nur bei vorhandenem Kontakt (19) zwischen der Spektrometervorrichtung (10) und der Probe (18) aktiviert ist, wobei die Steuereinrichtung (17) derart gestaltet ist, dass bei fehlendem Kontakt zwischen der Spektrometervorrichtung (10) und der Probe (18) ein Hinweissignal an den Benutzer ausgebbar ist.

2. Spektrometervorrichtung nach Anspruch 1, wobei die Steuereinrichtung (17) derart gestaltet ist, dass das Erfassen des Spektrums bei vorhandenem Kontakt (19) zwischen der Spektrometervorrichtung (10) und der Probe (18) mit höherer oder niedrigerer Beleuchtungsstärke als bei fehlendem Kontakt aktiviert ist.

3. Spektrometervorrichtung nach einem der vorhergehenden Ansprüche, wobei die Steuereinrichtung (17) derart gestaltet ist, dass bei bestehendem Kontakt zwischen der Spektrometervorrichtung (10) und der Probe (18) dem Spektrum ein Label zuordenbar ist, welches den Kontakt bezeichnet.

4. Spektrometervorrichtung nach einem der vorhergehenden Ansprüche, wobei der Betriebsparameter die Messdauer und/oder die Scanzeit umfasst.

5. Spektrometervorrichtung nach einem der vorhergehenden Ansprüche, wobei die Spektrometervorrichtung (10) in ein Handy, ein Smartphone oder ein sonstiges handgehaltenes Gerät integriert ist.

6. Spektrometervorrichtung nach einem der vorhergehenden Ansprüche, wobei die Kontaktsensoreinrichtung (15, 16) einen Näherungsschalter, Umgebungslichtsensor, Trägheitssensor, und/oder eine Kamera enthält.

7. Spektrometervorrichtung nach einem der vorangehenden Ansprüche, wobei die Lichtquelle (11) eine Glühlampe, einen thermischen Emitter, eine LED, eine LED mit Phosphor-Lichtquelle, einen Weißlichtlaser, eine Quantenpunkt-Lichtquelle, eine Weißlichtquelle, eine Gasentladungslampe oder eine sonstige breitbandige Lichtquelle aufweist.

8. Spektrometervorrichtung nach einem der vorangehenden Ansprüche,
wobei die Filtereinrichtung (13) ein Fabry-Pérot Interferometer oder eine optische Gittereinrichtung aufweist.

9. Spektrometervorrichtung nach einem der vorangehenden Ansprüche, wobei die Kontaktsensoreinrichtung (15, 16) separat von der Spektrometervorrichtung (10) vorgesehen ist.

10. Verfahren (20) zum Betreiben einer Spektrometervorrichtung (10) mit den Schritten:
Positionieren (22) der Spektrometervorrichtung (10) relativ zu einer Probe (18);
Prüfen (23) eines Bestehens eines Kontakts (19) zwischen der Spektrometervorrichtung (10) und der Probe (18);
Ändern zumindest eines Betriebsparameters einer Lichtquelle (11) und einer Erfassungseinrichtung (12), wenn der Kontakt (19) zwischen der Probe (18) und der Spektrometervorrichtung (10) besteht,
**dadurch gekennzeichnet, dass** ein Erfassen eines Spektrums nur bei vorhandenem Kontakt (19) zwischen der Spektrometervorrichtung (10) und der Probe (18) aktiviert wird, wobei bei fehlendem Kontakt zwischen der Spektrometervorrichtung (10) und der Probe (18) ein Hinweissignal an den Benutzer ausgegeben wird.

11. Verfahren nach Anspruch 10, wobei das Erfassen des Spektrums bei vorhandenem Kontakt (19) zwischen der Spektrometervorrichtung (10) und der Probe (18) mit höherer Beleuchtungsstärke als bei fehlendem Kontakt aktiviert wird.

## Claims

1. Spectrometer apparatus (10) comprising:
at least one light source (11) for irradiating a sample (18) with light;
an optical capture device (12) for capturing (26) the light scattered by the sample (18);
at least one optical filter device (13) arranged in front of and/or behind the sample (18),
a contact sensor device (15, 16) for determining a contact (19) between the sample (18) and the spectrometer apparatus (10) and for outputting a corresponding output signal;
a control device (17) for controlling the light source (11) and the capture device (12) in response to the output signal;
wherein the control device (17) is designed such that it changes at least one operating parameter of the light source (11) and of the capture device (12) if the output signal indicates the contact (19) between the sample (18) and the spectrometer apparatus (10),
**characterized in that** the control device (17) is designed such that the capture of the spectrum is activated only in the case where contact (19) between the spectrometer apparatus (10) and the sample (18) is present, wherein the control device (17) is designed such that in the case where contact between the spectrometer apparatus (10) and the sample (18) is absent, an indication signal is able to be output to the user.

2. Spectrometer apparatus according to Claim 1, wherein the control device (17) is designed such that the capture of the spectrum is activated with higher or lower illuminance in the case where contact (19) between the spectrometer apparatus (10) and the sample (18) is present compared with the case where contact is absent.

3. Spectrometer apparatus according to either of the preceding claims, wherein the control device (17) is designed such that in the case where there is contact between the spectrometer apparatus (10) and the sample (18), a label designating the contact is able to be assigned to the spectrum.

4. Spectrometer apparatus according to any of the preceding claims, wherein the operating parameter comprises the measurement duration and/or the scan time.

5. Spectrometer apparatus according to any of the preceding claims, wherein the spectrometer apparatus (10) is integrated into a mobile phone, a smartphone or some other handheld device.

6. Spectrometer apparatus according to any of the preceding claims, wherein the contact sensor device (15, 16) contains a proximity switch, an ambient light sensor, an inertia sensor, and/or a camera.

7. Spectrometer apparatus according to any of the preceding claims, wherein the light source (11) comprises an incandescent lamp, a thermal emitter, an LED, an LED with phosphor light source, a white light laser, a quantum dot light source, a white light source, a gas discharge lamp or some other broadband light source.

8. Spectrometer apparatus according to any of the preceding claims, wherein the filter device (13) comprises a Fabry-Pérot interferometer or an optical grating device.

9. Spectrometer apparatus according to any of the preceding claims, wherein the contact sensor device (15, 16) is provided separately from the spectrometer apparatus (10).

10. Method (20) for operating a spectrometer apparatus (10) comprising the following steps:
positioning (22) the spectrometer apparatus (10) relative to a sample (18);
checking (23) for existence of a contact (19) between the spectrometer apparatus (10) and the sample (18);
changing at least one operating parameter of a light source (11) and of a capture device (12) if the contact (19) between the sample (18) and the spectrometer apparatus (10) exists,
**characterized in that** a capture of a spectrum is activated only in the case where contact (19) between the spectrometer apparatus (10) and the sample (18) is present, wherein in the case where contact between the spectrometer apparatus (10) and the sample (18) is absent, an indication signal is output to the user.

11. Method according to Claim 10, wherein the capture of the spectrum is activated with higher illuminance in the case where contact (19) between the spectrometer apparatus (10) and the sample (18) is present compared with the case where contact is absent.

## Revendications

1. Arrangement de spectrométrie (10) comprenant :
au moins une source de lumière (11) destinée à irradier un échantillon (18) avec de la lumière ;
un dispositif de détection optique (12) destiné à détecter (26) la lumière diffusée par l'échantillon (18) ;
au moins un dispositif de filtrage optique (13) qui est disposé devant et/ou derrière l'échantillon (18),
un dispositif capteur de contact (15, 16) destiné à identifier un contact (19) entre l'échantillon (18) et l'arrangement de spectrométrie (10) et délivrer un signal de sortie correspondant ;
un dispositif de commande (17) destiné à commander la source de lumière (11) et le dispositif de détection (12) en réaction au signal de sortie ;
le dispositif de commande (17) étant configuré de telle sorte qu'il modifie au moins un paramètre de fonctionnement de la source de lumière (11) et du dispositif de détection (12) lorsque le signal de sortie indique le contact (19) entre l'échantillon (18) et l'arrangement de spectrométrie (10),
**caractérisé en ce que** le dispositif de commande (17) est configuré de telle sorte que la détection du spectre n'est activée que lors de la présence d'un contact (19) entre l'arrangement de spectrométrie (10) et l'échantillon (18), le dispositif de commande (17) étant configuré de telle sorte qu'un signal de notification à l'utilisateur peut être délivré en cas d'absence de contact entre l'arrangement de spectrométrie (10) et l'échantillon (18).

2. Arrangement de spectrométrie selon la revendication 1, le dispositif de commande (17) étant configuré de telle sorte que la détection du spectre lors de la présence d'un contact (19) entre l'arrangement de spectrométrie (10) et l'échantillon (18) est activée avec une intensité d'éclairage plus élevée ou plus faible que dans le cas d'un contact absent.

3. Arrangement de spectrométrie selon l'une des revendications précédentes, le dispositif de commande (17) étant configuré de telle sorte lors de la présence d'un contact entre l'arrangement de spectrométrie (10) et l'échantillon (18), une étiquette peut être attribuée au spectre, laquelle désigne le contact.

4. Arrangement de spectrométrie selon l'une des revendications précédentes, le paramètre de fonctionnement comprenant la durée de mesure et/ou le temps de balayage.

5. Arrangement de spectrométrie selon l'une des revendications précédentes, l'arrangement de spectrométrie (10) étant intégré dans un téléphone portable, un Smartphone ou un autre appareil tenu en main.

6. Arrangement de spectrométrie selon l'une des revendications précédentes, le dispositif capteur de contact (15, 16) contenant un détecteur de proximité, un capteur de lumière ambiante, un capteur d'inertie et/ou une caméra.

7. Arrangement de spectrométrie selon l'une des revendications précédentes, la source de lumière (11) possédant une lampe à incandescence, un émetteur thermique, une LED, une LED avec une source de lumière au phosphore, un laser à lumière blanche, une source de lumière à point quantique, une lampe à décharge de gaz ou une autre source de lumière à large bande.

8. Arrangement de spectrométrie selon l'une des revendications précédentes, le dispositif de filtrage (13) possédant un interféromètre de Fabry-Pérot ou un dispositif de réseau optique.

9. Arrangement de spectrométrie selon l'une des revendications précédentes, le dispositif capteur de contact (15, 16) étant disposé séparément de l'arrangement de spectrométrie (10).

10. Procédé (20) de fonctionnement d'un arrangement de spectrométrie (10) comprenant les étapes suivantes :
positionnement (22) de l'arrangement de spectrométrie (10) par rapport à un échantillon (18) ;
vérification (23) d'une existence d'un contact (19) entre l'arrangement de spectrométrie (10) et l'échantillon (18) ;
modification d'au moins un paramètre de fonctionnement d'une source de lumière (11) et d'un dispositif de détection (12) lorsque le contact (19) entre l'échantillon (18) et l'arrangement de spectrométrie (10) existe,
**caractérisé en ce qu'**une détection d'un spectre n'est activée que lors de la présence d'un contact (19) entre l'arrangement de spectrométrie (10) et l'échantillon (18), un signal de notification à l'utilisateur étant délivré en cas d'absence de contact entre l'arrangement de spectrométrie (10) et l'échantillon (18).

11. Procédé selon la revendication 10, la détection du spectre lors de la présence d'un contact (19) entre l'arrangement de spectrométrie (10) et l'échantillon (18) est activée avec une intensité d'éclairage plus élevée ou plus faible que dans le cas d'un contact absent.
